# EUROPEAN PATENT APPLICATION

(11) **EP 4 414 835 A1**
(43) Date of publication of application: **14.08.2024**
(21) Application number: 24152738.1
(22) Date of filing: 18.01.2024
(51) Int. Cl.: G06F 9/451, G06T 17/00, G06T 19/00, G06T 19/20

(54) **INTEGRATION FRAMEWORK FOR TWO-DIMENSIONAL AND THREE-DIMENSIONAL ELEMENTS IN AN ARTIFICIAL REALITY ENVIRONMENT**

(30) Priority: 10.02.2023 US 202318167478
(71) Applicant: Meta Platforms Technologies, LLC, Menlo Park, CA 94025 (US)
(72) Inventor: Mehta, Rohan, Menlo Park (US); Luh, Walter J., Menlo Park (US); Griffith, Eric, Menlo Park (US); Peng, Zeya, Menlo Park (US); Switzer, Lucas, Menlo Park (US); Flanagan, Dalton Thorn, Menlo Park (US)
(74) Representative: Murgitroyd & Company

(57) **Abstract**

Aspects of the present disclosure are directed to an integration framework for two-dimensional (2D) and three-dimensional (3D) elements in an artificial reality (XR) environment. The 2D and 3D integration framework can implement a two-layered application programming interface (API) system, where a developer can use a declarative API to define nodes by executing pre-defined functions, and an imperative API defines to define node by specifying one or more functions for those nodes. The framework can traverse a component tree of such nodes to extract and add the 2D elements onto a 2D panel in a first pass. In a second pass, the framework can extract the 3D elements, and determine how the 2D and 3D elements translate into a 3D world view. Based on this determination, the framework can draw selected 2D and 3D elements into the 3D world view, which can be rendered in the XR environment on an XR device.

## Description

### TECHNICAL FIELD

The present disclosure is directed to an integration framework for two-dimensional (2D) and three-dimensional (3D) elements in an artificial reality (XR) environment.

### BACKGROUND

Artificial reality (XR) devices are becoming more prevalent. As they become more popular, the applications implemented on such devices are becoming more sophisticated. Augmented reality (AR) applications can provide interactive 3D experiences that combine images of the real-world with virtual objects, while virtual reality (VR) applications can provide an entirely self-contained 3D computer environment. For example, an AR application can be used to superimpose virtual objects over a video feed of a real scene that is observed by a camera. A real-world user in the scene can then make gestures captured by the camera that can provide interactivity between the real-world user and the virtual objects. Mixed reality (MR) systems can allow light to enter a user's eye that is partially generated by a computing system and partially includes light reflected off objects in the real-world. XR experiences, such as AR, MR, and VR experiences, can be observed by a user through a head-mounted display (HMD), such as glasses or a headset.

XR experiences can include renderings of a variety of two-dimensional (2D) elements, such as flat virtual objects having x- and y-axis components (e.g., having lengths and heights). Concurrently or separately, XR experiences can include renderings of three-dimensional (3D) elements, such as 3D virtual objects having x-, y-, and z-axis components (e.g., having lengths, heights, and widths, i.e., depths). Rendering of 2D elements in an XR experience is conventionally handled by a dedicated 2D rendering framework, while rendering of 3D elements is handled by a dedicated 3D rendering framework, in conjunction with an XR engine, on an XR HMD.

### SUMMARY OF THE INVENTION

In accordance with a first aspect of the present disclosure, there is provided method for integrating two-dimensional and three-dimensional elements in an artificial reality environment, the method comprising:
obtaining a component tree including multiple nodes, wherein one or more of the multiple nodes are declaratively defined by executing one or more pre-defined functions, and at least one of the multiple nodes is imperatively defined by executing one or more functions specified for the at least one node, the multiple nodes including one or more two-dimensional elements and one or more three-dimensional elements;
performing a first pass of traversing the component tree including:
   extracting the one or more two-dimensional elements from the component tree while bypassing the one or more three-dimensional elements, and
   adding the one or more two-dimensional elements onto a panel in a renderable state, and
   performing a second pass of traversing the component tree including:
      determining how the one or more two-dimensional elements and the one or more three-dimensional elements translate into a three-dimensional world view, and
      extracting the one or more three-dimensional elements from the component tree; and drawing, into the artificial reality environment, at least one two-dimensional element of the one or more two-dimensional elements, selected from the panel, and at least one of the one or more three-dimensional elements, into the three-dimensional world view, wherein the drawing is based on the three-dimensional world view.

In some embodiments, the multiple nodes include a parent node and a child node dependent upon the parent node, and
wherein the drawing of a content element at the child node is dependent on a content element at the parent node.

In some embodiments, a first two-dimensional element of the one or more two-dimensional elements is at the parent node,
wherein a second two-dimensional element of the one or more two-dimensional elements is at the child node, and
wherein the first two-dimensional element is added to the panel prior to the second two-dimensional element.

In some embodiments, the content element at the parent node is a two-dimensional element of the one or more two-dimensional elements, and
wherein the content element at the child node is a three-dimensional element of the one or more three-dimensional elements.

In some embodiments, performing the second pass of traversing the component tree further includes:
flattening the three-dimensional element at the child node into a two-dimensional element onto the panel.

In some embodiments, the multiple nodes include at least one interaction node defining one or more events responsive to interaction with at least one of the one or more two-dimensional elements, at least one of the one or more three-dimensional elements, or both.

In some embodiments, the multiple nodes include at least one layout node defining how at least one of the one or more two-dimensional elements are positioned in the three-dimensional world view, how at least one of the one or more three-dimensional elements are positioned in the three-dimensional world view, or both.

In some embodiments, the multiple nodes include at least one physics node defining dynamic behavior of at least one of the one or more two-dimensional elements, at least one of the one or more three-dimensional elements, or both, within the artificial reality environment.

In some embodiments, the multiple nodes include at least one of:
A) an input node defining an input event corresponding to at least one of the one or more two-dimensional elements, at least one of the one or more three-dimensional elements, or both,
B) an output node defining an output event corresponding to at least one of the one or more two-dimensional elements, at least one of the one or more three-dimensional elements, or
C) both.

In accordance with a second aspect of the present disclosure, there is provided a computer-readable storage medium storing instructions that, when executed by a computing system, cause the computing system to perform a process for integrating two-dimensional and three-dimensional elements in an artificial reality environment, the process comprising:
obtaining a component tree including multiple nodes, the multiple nodes including one or more two-dimensional elements and one or more three-dimensional elements;
performing a first pass of traversing the component tree including:
   extracting the one or more two-dimensional elements from the component tree, and
   adding the one or more two-dimensional elements onto a panel in a renderable state, and
   performing a second pass of traversing the component tree including:
      determining how the one or more two-dimensional elements and the one or more three-dimensional elements translate into a three-dimensional world view, and
      extracting the one or more three-dimensional elements from the component tree; and drawing, into the artificial reality environment, at least one two-dimensional element of the one or more two-dimensional elements, selected from the panel, and at least one of the one or more three-dimensional elements, into the three-dimensional world view, wherein the drawing is based on the first pass and the second pass.

In some embodiments, one or more of the multiple nodes are declaratively defined by executing one or more pre-defined functions, and at least one of the multiple nodes is imperatively defined by executing one or more functions specified for the at least one node.

In some embodiments, the drawing is further based on the three-dimensional world view.

In some embodiments, the multiple nodes include at least one parent node and at least one child node dependent upon the parent node, and
wherein the drawing of a content element at the child node is dependent on a content element at the parent node.

In some embodiments, the content element at the parent node is a two-dimensional element of the one or more two-dimensional elements, and
wherein the content element at the child node is a three-dimensional element of the one or more three-dimensional elements.

In some embodiments, performing the second pass of traversing the component tree further includes:
flattening the three-dimensional element at the child node into a two-dimensional element onto the panel.

In accordance with a third aspect of the present disclosure, there is provided a computing system for integrating two-dimensional and three-dimensional elements in an artificial reality environment, the computing system comprising:
one or more processors; and
one or more memories storing instructions that, when executed by the one or more processors, cause the computing system to perform a process comprising:
   obtaining a component tree including multiple nodes, the multiple nodes including one or more two-dimensional elements and one or more three-dimensional elements;
   performing a first pass of traversing the component tree including:
      extracting the one or more two-dimensional elements from the component tree, and
      adding the one or more two-dimensional elements onto a panel in a renderable state, and
      performing a second pass of traversing the component tree including:
         determining how the one or more two-dimensional elements and the one or more three-dimensional elements translate into a three-dimensional world view, and
         extracting the one or more three-dimensional elements from the component tree; and
         drawing at least one two-dimensional element of the one or more two-dimensional elements, selected from the panel, and at least one of the one or more three-dimensional elements, into the three-dimensional world view, wherein the drawing is based on the first pass and the second pass.

In some embodiments, one or more of the multiple nodes are declaratively defined by executing one or more pre-defined functions that generate one or more nodes, and at least one of the multiple nodes is imperatively defined by evaluating corresponding imperative statements with content properties that produce one or more nodes.

In some embodiments, the multiple nodes include at least one interaction node defining one or more events responsive to interaction with at least one of the one or more two-dimensional elements, at least one of the one or more three-dimensional elements, or both.

In some embodiments, the multiple nodes include at least one layout node defining how at least one of the one or more two-dimensional elements are positioned in the three-dimensional world view, how at least one of the one or more three-dimensional elements are positioned in the three-dimensional world view, or both.

In some embodiments, the multiple nodes include at least one physics node defining dynamic behavior of at least one of the one or more two-dimensional elements, at least one of the one or more three-dimensional elements, or both, within the artificial reality environment.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for integrating two-dimensional (2D) and three-dimensional (3D) elements in an artificial reality (XR) environment for a user interface.
Figure 6 is a block diagram illustrating an ecosystem of a 2D and 3D integration framework in which some implementations of the present technology can operate.
Figure 7 is a block diagram illustrating an example component tree of nodes which can be obtained according to some implementations of the present technology.
Figure 8A is a conceptual diagram illustrating an example view from an artificial reality (XR) device of an XR messaging experience including two-dimensional (2D) and three-dimensional (3D) elements integrated by a 2D and 3D integration framework.
Figure 8B is a block diagram illustrating an example component tree of nodes for an artificial reality (XR) messaging experience which can be obtained according to some implementations of the present technology.

The techniques introduced here may be better understood by referring to the following Detailed Description in conjunction with the accompanying drawings, in which like reference numerals indicate identical or functionally similar elements.

### DETAILED DESCRIPTION

While there are frameworks for rendering two-dimensional (2D) virtual objects and frameworks for rendering three-dimensional (3D) virtual objects, these systems are conventionally kept separate due to differences in world placement strategies and rendering requirements, yet such separation makes development of artificial reality (XR) applications more costly and inefficient. Aspects of the present disclosure are directed to an integration framework for 2D and 3D elements (i.e., virtual objects) in an XR environment. Some implementations can implement a two-layered application programming interface (API) system, where developers can use a declarative API to define nodes by executing one or more pre-defined functions (e.g., generating a 2D element with specific pre-defined properties) and/or an imperative API to define nodes by executing one or more functions specified for those nodes (e.g., writing a sequence of commands that code to generate a 3D element).

Once an application, having been so designed, is executing, it can cause a combination of 2D and 3D elements to be rendered. This can include the rendering system obtaining a component tree including multiple nodes defined by such declarative statements or imperative commands. The nodes can include both 2D and 3D elements intermixed, and even include 2D and 3D elements at parent and child nodes with respect to each other within the component tree. Some implementations can traverse the component tree of nodes to develop a 3D world view including the 2D and 3D elements. In a first pass of traversing the component tree, some implementations can extract 2D elements while bypassing the 3D elements, and add the 2D elements onto a flat 2D canvas, such as a panel, with texture, i.e., in a renderable state. In a second pass of traversing the component tree, some implementations can extract the 3D elements from the component tree, and determine how the 2D elements and the 3D elements translate into the 3D world view, e.g., how they should be rendered. Based on the determination, some implementations can draw at least one of the 2D elements, selected from the 2D canvas, and at least one of the 3D elements, into the 3D world view. Some implementations can determine which of the 2D elements and 3D elements should be drawn into the 3D world view based on definitions existing at nodes of the component tree, such as rules specifying how and when a particular 2D or 3D element should be displayed, e.g., as a response to particular detected input, when another 2D or 3D element is output, etc. Some implementations can render the 3D world view in the XR environment via a user interface, such as on an XR device.

For example, an XR chat application can generate a component tree with a root node. By providing a series of declarative statements and/or imperative commands, the 2D and 3D integration framework described herein can populate multiple child nodes under the root node that define the components of the XR chat application. The child nodes can include, for example, 2D virtual objects, 3D virtual objects, and, in some implementations, layout components defining how the 2D and 3D virtual objects are arranged in the overall display of the XR chat experience. In some implementations, the child nodes can include other components defining display of the chat experience in XR as well, such as world-locked or head-locked view definitions, environmental changes affecting display characteristics (e.g., gestures or interactions of a user of an XR device, ambient lighting changes, movement of physical objects in a real-world environment of the user, etc.). The 2D virtual objects for the XR chat experience can include, for example, 2D text boxes, 2D shapes, names of users within the chat, etc. The 3D virtual objects can include, for example, 3D shapes, avatars of users within the chat, 3D emojis sent within the chat, etc. The layout components can define, for example, where a list of users in the chatroom are displayed, where new text boxes are displayed, how the various 2D and 3D components are laid out with respect to each other, etc.

In some cases, the 2D and 3D integration framework can generate child nodes corresponding to 2D text boxes based on a declarative statement from a computing system (e.g., associated with a developer of the chat application) requesting that an XR chat experience be generated. For example, the 2D and 3D integration framework can receive the declarative statement and translate it into pre-defined commands that generate nodes associated with rendering the XR chat experience, e.g., 2D text boxes. In some implementations, the 2D and 3D integration framework can receive imperative commands to generate parts of the XR chat experience, the imperative commands specifying specific lines of code for rendering the XR chat experience, including the 2D text boxes.

In some implementations, particular nodes can have their own further child nodes, specifying new elements or, in some cases, further defining the particular nodes. For example, 2D text boxes can have attributes defining how the text boxes displayed, e.g., brightness corresponding to a certain duration of display. In another example, 3D avatars can have input/output events that specify when a user's avatar is displayed (e.g., when that user sent the last chat), dynamic features of the avatar responsive to input (e.g., smiling of the avatar when an XR device detects a user smiling), etc. In another example, both a 2D child node and a 3D child node can have a grandchild node defining how the 2D virtual object and the 3D virtual object interact with each other (e.g., when a 2D message is sent from a user saying, "I don't know," his 3D avatar can shrug). In one example, a 2D element at a child node can have a 3D element at a grandchild node, and vice versa.

Once the component tree is obtained, the 2D and 3D integration framework can traverse the component tree to extract the 2D elements and add them onto a flat panel in a first pass. In a second pass, the 2D and 3D integration framework can again traverse the component tree to extract the 3D elements and determine how the 2D and 3D elements should be drawn into the 3D world view, e.g., based on any layout components and/or other detailed components at nodes of the component tree. Based on this determination, the 2D and 3D integration framework can draw 2D elements and 3D elements applicable to the XR chat experience in the 3D world view, as defined by one or more nodes of the component tree. An XR device launching the XR chat experience can present the 3D world view, which can change while the XR chat experience continues, according to inputs, outputs, environmental changes, updates, etc., as specified in relation to the component tree.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Implementations provide a specific technical improvement in the field of artificial reality (XR) rendering. Traditionally, rendering of two-dimensional (2D) elements is handled by a 2D rendering framework, while rendering of three-dimensional (3D) elements is handled by a 3D rendering framework. A traditional 2D rendering framework would be unable to understand how to render a 3D element, as the 3D element can include additional features not applicable to a 2D element, such as a depth component. Implementations described herein provide an integrated 2D and 3D rendering framework that can seamlessly render both 2D and 3D elements within an XR experience, understanding the features of the respective elements and their positions, layouts, etc., with respect to each other, with improved efficiency due to not having to communicate with and/or interface with separate 2D and 3D rendering frameworks. Further, some implementations can allow applications that would traditionally be rendered in 2D (e.g., a messenger application including 2D text boxes) to integrate 3D components (e.g., 3D emojis or other components), providing a more robust user experience. Further, by eliminating the need to interface between separate 2D and 3D rendering frameworks, compute resources can be conserved on an XR device, such as processing power, memory, battery power, etc.

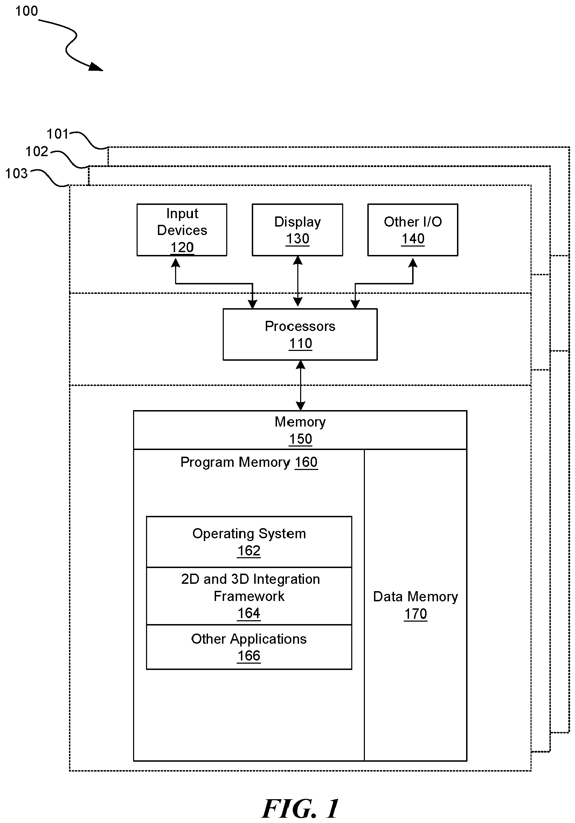

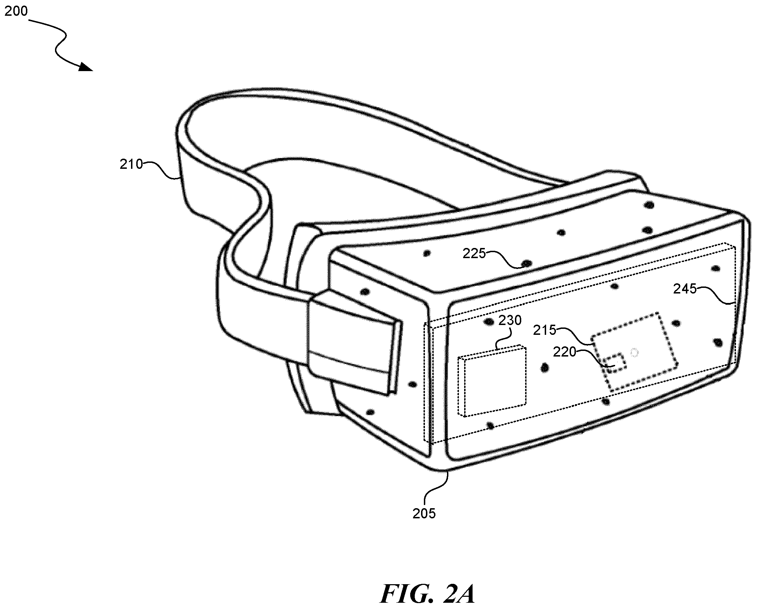

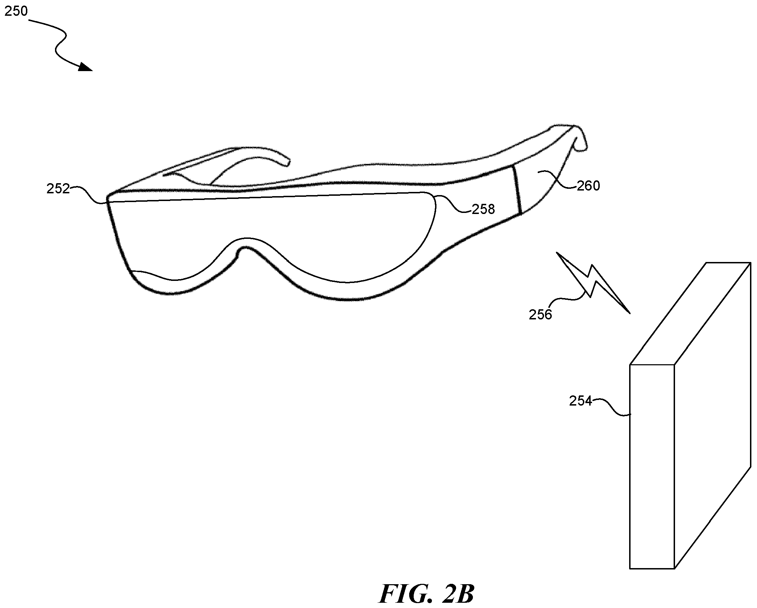

Several implementations are discussed below in more detail in reference to the figures. Figure 1 is a block diagram illustrating an overview of devices on which some implementations of the disclosed technology can operate. The devices can comprise hardware components of a computing system 100 that can integrate two-dimensional (2D) and three-dimensional (3D) elements in an artificial reality (XR) environment. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, 2D and 3D integration framework 164, and other application programs 166. Memory 150 can also include data memory 170 that can include, e.g., component tree data, node data, 2D element data, 3D element data, content property data, traversal data, panel data, layout data, drawing data, rendering data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

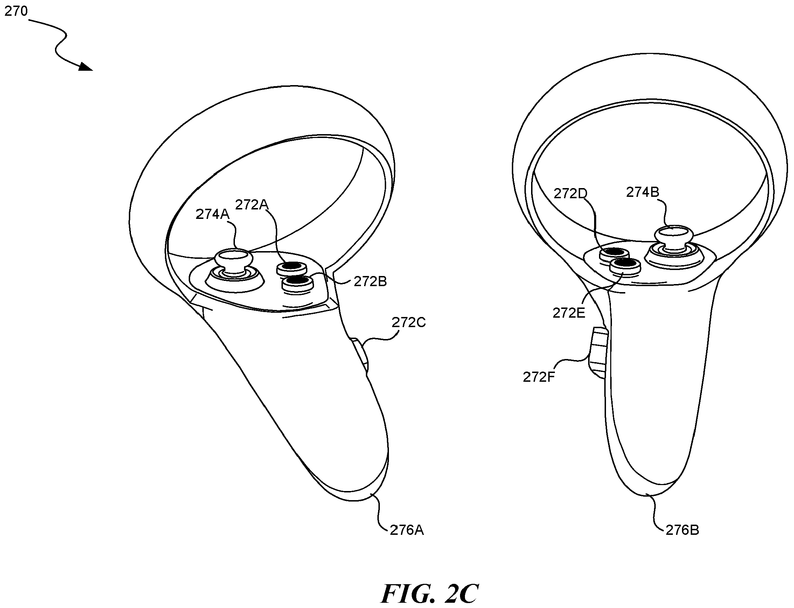

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

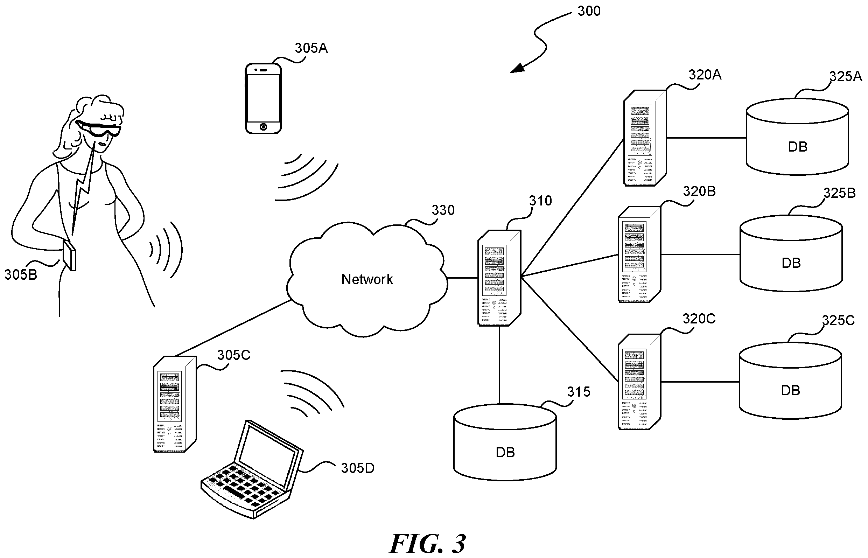

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

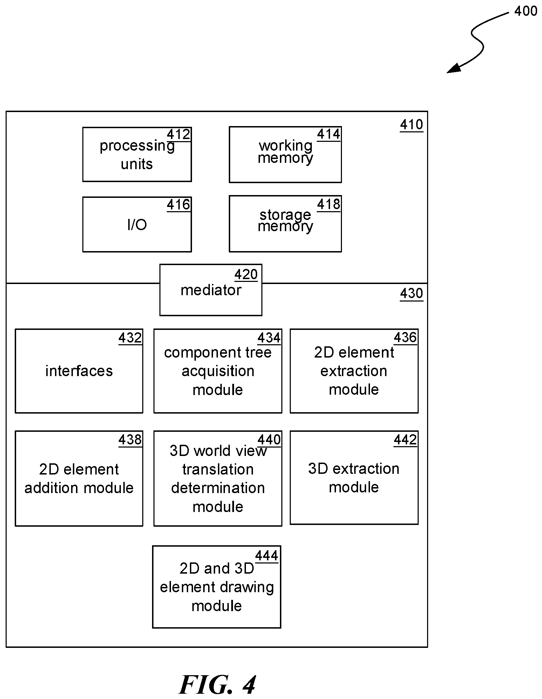

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for integrating two-dimensional (2D) and three-dimensional (3D) elements in an artificial reality (XR) environment. Specialized components 430 can include component tree acquisition module 434, 2D element extraction module 436, 2D element addition module 438, 3D world view translation determination module 440, 3D element extraction module 442, 2D and 3D element drawing module 444, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

Component tree acquisition module 434 can obtain a component tree including multiple nodes. The component tree can define an integrated 2D and 3D world view using the multiple nodes. The multiple nodes can correspond to, for example, 2D elements (e.g., 2D virtual objects), 3D elements (e.g., 3D virtual objects), layout nodes (e.g., defining how the 2D and 3D elements should be arranged when rendered), etc.

In some implementations, a developer can define at least some of the nodes declaratively (i.e., defining what should be rendered without specifying exactly how it should be rendered). For example, component tree acquisition module 434 can receive a declarative statement requesting generation of a first node with a given mesh and texture for a part of an XR bowling experience. The declarative call can include calls to additional declarative or imperative elements, which can be executed recursively until primitives are reached that can be collectively rendered. Component tree acquisition module 434 can access one or more pre-defined functions (e.g., pre-defined code) corresponding to the declarative calls, to determine how to create and integrate elements of the XR bowling experience (e.g., generating lighting, meshes such as a bowling ball, a bowling lane, pins, etc., generating textures, generating instructions, notifications, and other and 2D elements, etc.). Component tree acquisition module 434 can execute those functions in order to define respective nodes.

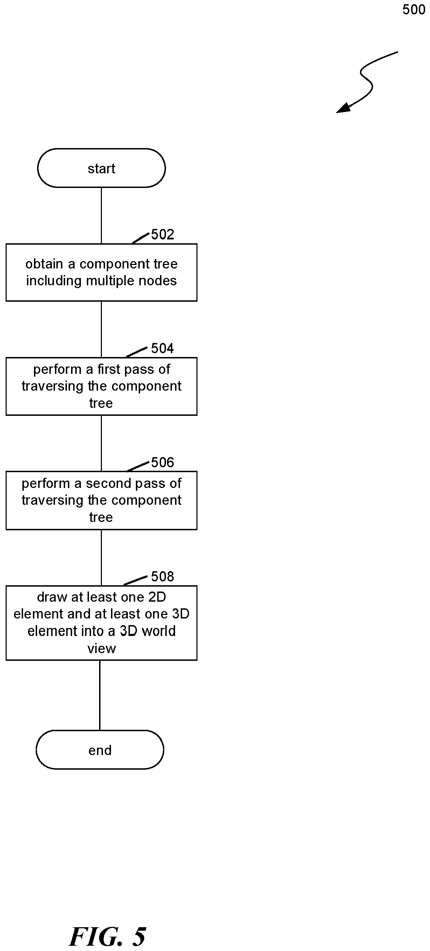

In some implementations, a developer can also define at least some of the nodes imperatively by providing one or more functions for those nodes (e.g., by providing a sequence of commands to be executed for generating views of the experience and its various components - such as when to update the component and access functions to update properties of the component). Based on these declarative statements and/or imperative commands, component tree acquisition module 434 can obtain the component tree for an XR experience. Further details regarding obtaining a component tree including multiple nodes are described herein with respect to block 502 of Figure 5.

In a first pass of traversing the component tree obtained by component tree acquisition module 434, 2D element extraction module 436 can extract one or more 2D elements from the component tree. In some implementations, 2D element extraction module 436 can start at the top of the component tree (i.e., the highest level "root" node) and extract any 2D elements, then traverse down to the lower level nodes to extract dependent 2D elements (which may include recursive calls at various nods to generate subsequent nodes until renderable primitives are reached). In some implementations, in the first pass of traversing the component tree, 2D element extraction module 436 can bypass any 3D elements in the component tree. Further details regarding extracting 2D elements from a component tree are described herein with respect to block 504 of Figure 5.

In the first pass of traversing the component tree obtained by component tree acquisition module 434, 2D element addition module 438 can add the one or more 2D elements extracted by 2D element extraction module 436 onto a panel (i.e., a 2D canvas) in a renderable state, i.e., with texture. In some implementations, 2D element addition module 438 can add a 2D element at a parent node to the panel before adding any 2D elements at child nodes dependent upon the parent node. In some implementations, all of the 2D elements extracted by 2D element extraction module 436 can be added to the same panel. However, it is contemplated that in some implementations, one or more of the 2D elements extracted by 2D element extraction module 436 can be added to different panels. Further details regarding adding 2D elements to a panel are described herein with respect to block 504 of Figure 5.

In a second pass of traversing the component tree obtained by component tree acquisition module 434, 3D world view translation determination module 440 can determine how the one or more 2D elements and the one or more 3D elements translate into a 3D world view. 3D world view translation determination module 440 can determine how the 2D and 3D elements translate into the 3D world view by, for example, traversing the component tree for nodes indicating how, where, and, in some implementations, when, the 2D and 3D elements should be placed into the 3D world view to be seen by a user of an XR device. Such nodes can include, for example, layout nodes, interaction nodes, input/output nodes, etc. Further details regarding determining how 2D elements and 3D elements translate into a 3D world view are described herein with respect to block 506 of Figure 5.

Further in the second pass of traversing the component tree obtained by component tree acquisition module 434, 3D element extraction module 442 can extract one or more 3D elements from the component tree. In some implementations, 3D element extraction module 442 can start at the top of the component tree (i.e., the highest level node) and extract any 3D elements, then traverse down the lower level nodes to extract dependent 3D elements. Further details regarding extracting 3D elements from a component tree are described herein with respect to block 506 of Figure 5.

2D and 3D element drawing module 444 can draw at least one 2D element of the one or more 2D elements, selected from the panel, and at least one 3D element of the one or more 3D elements, into the 3D world view. In some implementations, 2D and 3D element drawing module 444 can draw the at least one 2D element and the at least one 3D element based on the determination of how the one or more 2D elements and the one or more 3D elements translate into the 3D world view, as made by 3D world view translation determination module 440. In some implementations, 2D and 3D element drawing module 444 can further select which 2D elements and 3D elements to draw into the 3D world view, of those extracted by 2D element extraction module 436 and 3D element extraction module 442, based on the determination, i.e., not all of the extracted 2D and 3D elements should be in the 3D world view at a particular time, under particular conditions, etc. Further details regarding drawing 2D and 3D elements into a 3D world view based on a determination of how they translate into a 3D world view are described herein with respect to block 508 of Figure 5.

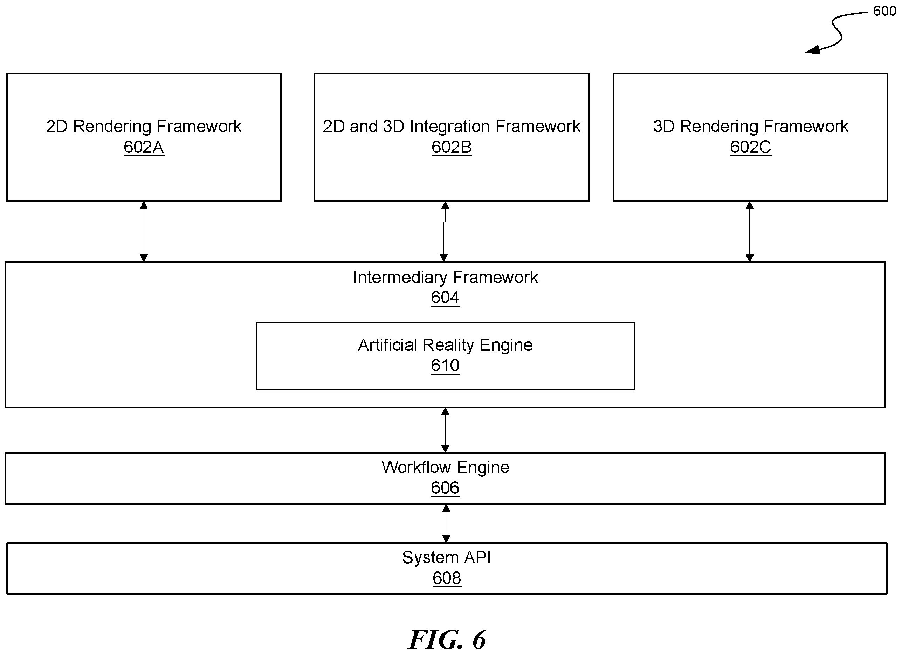

In some implementations, specialized components 430 can further include a 3D world view rendering module (not shown). The 3D world view rendering module can, in conjunction with an XR engine (e.g., XR engine 610 of Figure 6 described herein), render the 3D world view in an XR environment via a user interface, such as on an XR device. Thus, in some implementations, specialized components 430 can obtain a component tree of nodes defining 2D elements and 3D elements (defined using declarative statements and/or imperative commands) within an XR experience, and output a 3D world view as pixels on an XR device.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for integrating two-dimensional (2D) and three-dimensional (3D) elements in an artificial reality (XR) environment for a user interface, such as an XR head-mounted display (HMD). In some implementations, process 500 can be performed as part of a rendering sequence of an executing XR application. For example, process 500 can be performed in part responding to a user request to execute an XR experience provided by a developer of the XR experience (a "developer computing system"), where the developer computing system previously provided one or more imperative commands and/or one or more declarative statements defining aspects of the XR experience.

In some implementations, some or all of process 500 can be performed by an XR device, such as an XR HMD (e.g., XR HMD 200 of Figure 2A and/or XR HMD 252 of Figure 2B). In some implementations, some or all of process 500 can be performed by one or more other components of an XR system in operable communication with an XR HMD, such as separate processing components. In some implementations, some or all of process 500 can be performed by a remote server or computing system associated with a platform of an XR device (a "platform computing system"). In some implementations, process 500 can be performed by 2D and 3D integration system 164 of Figure 1. In some implementations, process 500 can be performed by specialized components 430 of Figure 4.

At block 502, process 500 can obtain a component tree including multiple nodes. In some implementations, the multiple nodes can include at least one 2D element and at least one 3D element, such as a 2D or 3D virtual object and/or a 2D or 3D model. The at least one 2D element can be defined on an x- and y-axis coordinate plane, i.e., a panel having properties in a length and height direction. The at least one 3D element can be defined on an x-, y-, and z-axis coordinate plane, i.e., have properties in a length, height, and width (i.e., depth) direction, a defined mesh, etc.

In some implementations, the multiple nodes can include layout nodes, e.g., row, column, layer, sizing, grouping, volume, etc. nodes defining overall sizing, ratios, how the 2D and 3D elements are arranged, etc. In some implementations, the multiple nodes can include interaction properties or sub-nodes defining one or more events responsive to interaction with a 2D element and/or 3D element, such as actions taken on an XR device. In some implementations, the multiple nodes can physics nodes defining dynamic behavior of a 2D element and/or 3D element, such as movement, trajectory, velocity, momentum, acceleration, and/or any dynamic behavior of a 2D and/or 3D element as they interact with each other. In some implementations, the multiple nodes can include lighting nodes defining light characteristics and/or effects associated with a 2D and/or 3D element. In some implementations, the multiple nodes can include audio nodes defining spatial audio interactions for the artificial reality environment. In some implementations, the multiple nodes can include styling nodes defining parent node aspects such as container features, colors, visibility/opacity, selectability, etc.

In some implementations, the multiple nodes can include functions or sub-nodes for responding to conditions such as an input event corresponding to a 2D and/or 3D element (e.g., a 2D text box that can receive audible input). In some implementations, the input event can be, for example, detection of a gesture by an XR device and/or interaction with a 2D and/or 3D element by user of the XR device (e.g., using cameras and/or one or more sensors of an inertial measurement unit (IMU), such as accelerometers, gyroscopes, compasses, etc.). In some implementations, the input event can be, for example, detection of an audible command relative to a 2D and/or 3D element as detected by one or more microphones integral with or in operable communication with the XR device. In some implementations, the input event can be, for example, selection of a physical button on a controller in operable communication with the XR device (e.g., controller 276A and/or 276B of Figure 2C).

In some implementations, the multiple nodes can include functions or sub-nodes for outputting an event corresponding to a 2D and/or 3D element. In some implementations, the output event can be a change to a 2D and/or 3D element responsive to detection of an input event or interaction with other nodes. In some implementations, the output event can be a change to a 2D and/or 3D element responsive to detection of an environmental change (e.g., a change in ambient lighting, a change in temperature, a change in time of day, a change in physical objects in a real-world environment surrounding the XR device, such as movement, and/or the like).

In some implementations, the multiple nodes define a structure between parent nodes with one or more child nodes dependent thereon. A content element at the child node (e.g., a 2D graphic) can be dependent on a content element at the parent node (e.g., a 2D message), such that rendering of the content element at the child node is dependent on rendering of parent node (e.g., the 2D graphic is only displayed when the 2D message is displayed, the 2D graphic is rendered in a particular way based on how the 2D message is rendered, etc.). In some implementations, a content element at a parent node can be a 2D element (e.g., a 2D message), while a content element at a child node can be a 3D element (e.g., a 3D graphic), or vice versa.

In some implementations, one or more of the multiple nodes can be declaratively defined by executing one or more pre-defined functions. In some implementations, the nodes can be declaratively defined by one or more statements received from a developer computing system. The one or more statements can describe what the developer computing system wants to be rendered in that node without saying how it gets rendered, where the rendering of the node will instead depend on a render function in the pre-defined functions and a context of the node in relation to its parent and child elements. For example, a declarative statement can request that a 3D cube be generated having pre-defined properties provided by the developer computing system. Process 500 can retrieve and execute pre-defined code based on the declarative statement to generate the 3D cube. In another example, a declarative statement can request that a message bubble be generated. Process 500 can execute pre-defined code associated with generating a message bubble to generate nodes based on the primitive elements that make up the message bubble, such as a 2D text element, a 2D image, a 3D model, etc., which process 500 knows how to render. In other words, in some implementations, process 500 can receive a declarative statement relative to one or more functions, and can generate the node, sub-nodes, etc., based on pre-defined code retrieved and executed based on the declarative statement.

In some implementations, at least one of the multiple nodes can be imperatively defined by executing one or more functions specified for the at least one node. In some implementations, the nodes can be imperatively defined at a developer computing system. The one or more commands can provide specific instructions (i.e., functions) to be performed to render a content element in a node, get and set properties of the node, specify when to update rendering of the node, etc. For example, an imperative command can provide specific lines of code for rendering a message bubble, including instructions for rendering its components (e.g., a 2D text element, a 2D image, a 3D model, etc.).

At block 504, process 500 can perform a first pass of traversing the component tree. On the first pass, process 500 can extract the one or more 2D elements from the component tree, while bypassing the one or more 3D elements on the component tree. Process 500 can further add the one or more two-dimensional elements onto a 2D panel in a renderable state with texture. In some implementations, on the first pass, process 500 can start at the top of the tree (i.e., a root node), add any 2D components associated with the root node to the panel, then traverse downward in the component tree, adding 2D elements in a parent node before adding any 2D elements in child nodes. Traversing the tree can include executing code defined at each node (pre-defined code corresponding to declarative statements or code defined for imperative nodes) to recursively generate sub-nodes until renderable leaf nodes are reached. In some implementations, process 500 can add all of the one or more two-dimensional elements onto the same 2D panel, conserving compute resources. In some implementations in which a parent node having a 2D element has a child node having a 3D element, process 500 can flatten the 3D element into a 2D element on the 2D panel, thereby conserving compute resources (e.g., such as when power is low on an XR device).

At block 506, process 500 can perform a second pass of traversing the component tree. On the second pass, process 500 can determine how the one or more 2D elements and the one or more 3D elements translate into a 3D world view. For example, process 500 can extract information from one or more nodes of the component tree that define how and when the 2D and 3D elements should exist in the 3D world view, and how they're laid out with respect to each other. In addition, nodes can be placed in the world view based on their position in the component tree - e.g., a volume parent having two volume child nodes can be placed such that the child nodes are inside the parent node and sized to take an equal amount of space (when allowed by their sizing attributes). Process 500 can extract such information from other nodes on the component tree, such as layout nodes, interaction nodes, input nodes, output nodes, etc. On the second pass, process 500 can further extract the one or more 3D elements from the component tree.

At block 508, process 500 can draw at least one 2D element of the one or more 2D elements, selected from the panel, and at least one of the one or more 3D elements, into the 3D world view. In some implementations. process 500 can draw the at least one 2D element, and the at least one 3D element, into the 3D world view, based on the extracted 2D and 3D elements and the determination of how the 2D and 3D elements should exist in the 3D world view, i.e., the translation of the 2D and 3D elements into the 3D world view. In some implementations, the at least one 3D element can be drawn into the 3D world view constrained to the 2D-style layout - allowing the 3D element to be positioned in conjunction with 2D elements. In some implementations, the 3D world view can be rendered in the XR environment via a user interface, such as an XR HMD.

In some implementations, a developer computing system and/or process 500 can update the component tree of nodes based on, for example, additional declarative statements and/or imperative commands, changes in nodes caused by input/output events, environmental changes, etc. Upon updating, process 500 can traverse the updated nodes of the component tree to identify any changes that need to be made within the 3D world view. Process 500 can then update the 3D world view with such changes.

Figure 6 is a block diagram illustrating an ecosystem 600 of a 2D and 3D integration framework 602B in which some implementations of the present technology can operate. In some implementations, some or all of ecosystem 600 can be included in an XR device, such as an XR HMD (e.g., XR HMD 200 of Figure 2A and/or XR HMD 252 of Figure 2B). In some implementations, some or all of ecosystem 600 can be included in another component of an XR system including the XR device, such as separate processing components. In some implementations, some or all of ecosystem 600 can be included in a server located remotely from an XR device, such as a platform computing system. In some implementations, 2D and 3D integration framework 602B can be similar to 2D and 3D integration framework 164 of Figure 1.

2D and 3D integration framework 602B can be in operable communication with intermediary framework 604. Intermediary framework 604 can further be in operable communication with 2D rendering framework 602A, which can be a framework dedicated only to rendering 2D elements, and 3D rendering framework 602C, which can be a framework dedicated only to rendering 3D elements. Intermediary framework 604 can provide an interface for 2D rendering framework 602A, 2D and 3D integration framework 602B, and 3D rendering framework 602C, which can be disparate, independent rendering frameworks, and can coordinate rendering of multiple pieces of content coming from the different rendering frameworks. Further details regarding the functionalities of an intermediary framework are described in U.S. Provisional Patent Application No. 63/383,266, entitled, "Coordination Between Independent Rendering Frameworks," filed November 11, 2022.

Intermediary framework 604 can include XR engine 610. XR engine 610 can manage all rendering for an XR device via a system API (not shown). XR engine 610 can be the runtime and rendering engine for 2D rendering framework 602A, 2D and 3D integration framework 602B, and 3D rendering framework 602C, as coordinated by intermediary framework 604. Once a component tree of nodes is obtained, 2D and 3D integration framework 602B can generate a scene graph including the 2D and 3D elements corresponding to the nodes, and send the entire scene graph to XR engine 610. XR engine 610 can then figure out how to express (i.e., render) the nodes of the component tree in a manner that makes sense at runtime, e.g., as pixels on a display of the XR device.

Intermediary framework 604 can further be in operable communication with workflow engine 606, which can manage the workflow of intermediary framework 604 and provide real-time processing for actions without the need for code. Workflow engine 606 can be in operable communication with system API 608. System API 608 can be a standard, low-level system API upon which a 3D world view is built. In some implementations, system API 714 can be OpenXR.

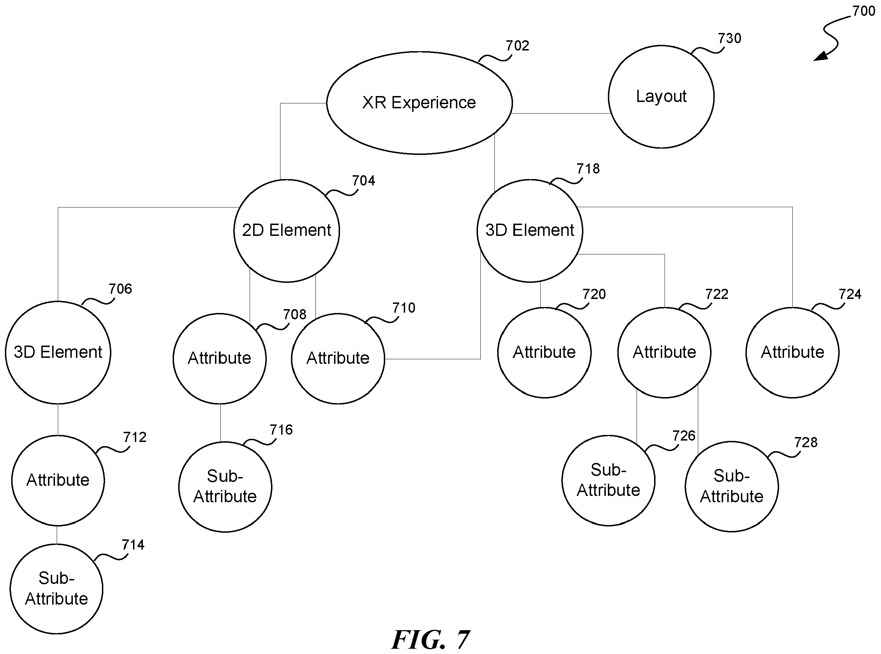

Figure 7 is a block diagram illustrating an example component tree 700 of nodes 702-730 which can be obtained according to some implementations of the present technology. Component tree 700 can include root node 702, which, in this example, can be an XR experience, such as an XR messaging application, an XR chat room, an XR game, and/or any other renderable experience having 2D and 3D elements, such as an augmented reality (AR) or mixed reality (MR) experience. Any of nodes 704-730 can be any of the types of nodes described herein, and the various labels used herein are used for exemplary purposes.

Root node 702 can have child nodes corresponding to elements of an XR experience, such as 2D element 704, 3D element 718, and layout 730. 2D element 704 can further have its own child nodes, such as 3D element 706, attribute 708 of 2D element 704 (which has its own sub-attribute 716 at a child node), and attribute 710 of 2D element 704. 3D element 706 can be dependent on 2D element 704, e.g., can only be rendered if 2D element 704 is rendered. 3D element 706 can have its own attribute 712 as a child node and sub-attribute 714 as a grandchild node. For example, attribute 712 can further specify a property of 3D element 706, and sub-attribute 714 can further specify a condition of attribute 712. Similarly, 3D element 718 can have child nodes corresponding to attribute 710 (shared on a child node with 2D element 704), attribute 720, attribute 722, and attribute 724. In component tree 700, attribute 722 can have multiple sub-attributes, i.e., sub-attribute 726 and sub-attribute 728. In some implementations, layout 730 at a child node of root node 702 can specify the arrangement of 2D element 704 and 3D element 718 in the XR experience specified by root node 702, such as their positions, their sizing with respect to each other, etc. In some cases, the layout node 730 can be the parent node of the further nodes 704 and 718. In some cases, instead of layout node 730 being a single node, it can be a set of nodes defining spatial relationships with parent and child nodes, such as rows, columns, layers, etc., where children of these layout nodes will then be arranged within the defined spatial relationships. For example, the root node can have three layer nodes, one of the layer nodes can have a row node, which has three column nodes. Each of these column nodes can include a 2D or 3D element, which when rendered, are placed within the corresponding column, row, and layer.

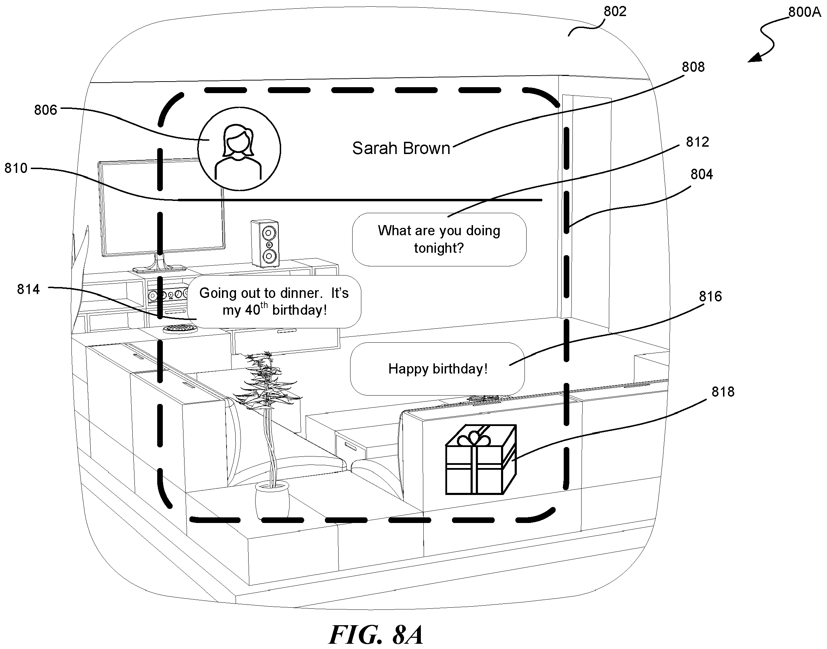

Figure 8A is a conceptual diagram illustrating an example view 800A from an artificial reality (XR) device of an XR messaging experience 804 including two-dimensional (2D) and three-dimensional (3D) elements integrated by a 2D and 3D integration framework. In some implementations, the 2D and 3D integration framework can be similar to 2D and 3D integration framework 164 of Figure 1 and/or 2D and 3D integration framework 602B of Figure 6. In view 800, XR messaging experience 804 can include virtual objects overlaid on a view of real-world environment 802, such as in an augmented reality (AR) or mixed reality (MR) experience.

XR messaging experience 804 can include a number of 2D and 3D elements. For example, XR messaging experience can include 2D avatar 806, 2D name 808, 2D divider 810, 2D text boxes 812-816, and 3D graphic 818, e.g., a 3D gift. In some implementations, although XR messaging experience 804 can be a 2D experience, XR messaging experience 804 can integrate 3D graphic 818 alongside the 2D elements (i.e., 2D avatar 806, 2D name 808, 2D divider 810, 2D text boxes 812-816), using the techniques described herein.

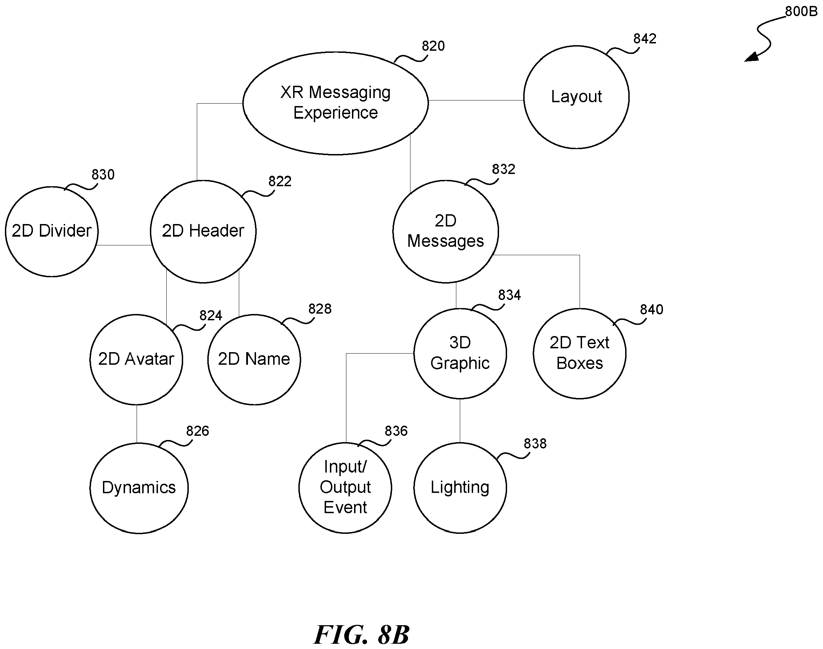

Figure 8B is a block diagram illustrating an example component tree 800B of nodes 820-830 for an artificial reality (XR) messaging experience, which can be obtained according to some implementations of the present technology. Root node 820 can correspond to an XR messaging experience, e.g., XR messaging experience 804 of Figure 8A. Root node 820 can have underlying parent nodes 822, 832, and 842, defining attributes of XR messaging experience 804. Parent node 822 can correspond to a 2D header in XR messaging experience 804. Parent node 822 (corresponding to the 2D header) can have three child nodes 824, 828, 830, corresponding to 2D avatar 806, 2D name 808, and 2D divider 810 of Figure 8A, respectively. Child node 824 can have a grandchild node 826, corresponding to dynamics of 2D avatar 806, for example.

Parent node 832 can correspond to 2D messages in XR messaging experience 804. Parent node 832 (corresponding to the 2D messages) can have two child nodes 834, 840, corresponding to 3D graphic 818 and 2D text boxes 812-816 of Figure 8A, respectively. Child node 834 (corresponding to 3D graphic 818) can have two grandchild nodes 836, 838. Grandchild node 836 can correspond to an input/output event (i.e., selection of 3D graphic 818 from view 800A of Figure 8A can cause 3D graphic 818 to change, e.g., gesturing toward 3D graphic 818 can cause the gift to open). Grandchild node 838 can correspond to lighting applied to 3D graphic 818.

By receiving declarative statements and/or imperative commands, specified at a developer computing system, the 2D and 3D integration framework described herein (e.g., 3D integration framework 164 of Figure 1 and/or 2D and 3D integration framework 602B of Figure 6) can populate nodes 820-842 and create component tree 800B defining XR messaging experience 804 of Figure 8A rendered on an XR device. For example, the 2D and 3D integration framework can generate root node 820 based on a declarative statement from the developer computing system requesting generation of XR messaging experience 804, without specifying how to render XR messaging experience 804. The 2D and 3D integration framework can then translate the declarative statement into specific commands to generate parent nodes 822, 832, 842, their respective children nodes and grandchildren nodes, and so on and so forth,

Once component tree 800B is populated, the 2D and 3D integration framework can traverse component tree 800B. Starting at the root node and heading down to the lowest level child nodes, the 2D and 3D integration framework can traverse down the tree to extract the 2D elements at various nodes and add them to a 2D panel in a first pass. For example, the 2D and 3D integration framework can start by extracting the 2D header at parent node 822, and traverse downward to child nodes 824, 828, 830, to draw 2D avatar 806, 2D name 808, and 2D divider 810 onto the panel. The 2D and 3D integration framework can further extract 2D messages 832, and traverse downward to child node 840 to draw 2D text boxes 812-816. On the first pass of traversing component tree 800B, the 2D and 3D integration framework can bypass child node 834 corresponding to 3D graphic 818 of Figure 8A. In some implementations, the 2D and 3D integration framework can add all of 2D avatar 806, 2D name 808, 2D divider 810, and 2D text boxes 812-816 onto a single flat panel.

In a second pass, the 2D and 3D integration framework can again traverse component tree 800B to extract 3D graphic 818 from child node 834. The 2D and 3D integration framework can further determine how 2D avatar 806, 2D name 808, 2D divider 810, 2D text boxes 812-816, and 3D graphic 818 should be drawn into a 3D world view, e.g., based on: parent node 842 defining a layout for 2D avatar 806, 2D name 808, 2D divider 810, 2D text boxes 812-816, and 3D graphic 818; based on dynamics defined at grandchild node 826 for 2D avatar 806; based on an input/output event defined at grandchild node 836 for 3D graphic 818; based on lighting defined at grandchild node 838 for 3D graphic 818; and/or the like. Based on this determination, the 2D and 3D integration framework (in conjunction with an XR engine, such as XR engine 610 of Figure 6) can draw 2D avatar 806, 2D name 808, 2D divider 810, 2D text boxes 812-816, and 3D graphic 818 into a 3D world view, e.g., view 800A of Figure 8A.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations as defined in the appended claims. The specific features and acts described above are disclosed as example forms of implementing the claims that follow. Accordingly, the embodiments and implementations are not limited except as by the appended claims.

## Claims

1. A method for integrating two-dimensional and three-dimensional elements in an artificial reality environment, the method comprising:
obtaining a component tree including multiple nodes, wherein one or more of the multiple nodes are declaratively defined by executing one or more pre-defined functions, and at least one of the multiple nodes is imperatively defined by executing one or more functions specified for the at least one node, the multiple nodes including one or more two-dimensional elements and one or more three-dimensional elements;
performing a first pass of traversing the component tree including:
extracting the one or more two-dimensional elements from the component tree while bypassing the one or more three-dimensional elements, and
adding the one or more two-dimensional elements onto a panel in a renderable state, and
performing a second pass of traversing the component tree including:
determining how the one or more two-dimensional elements and the one or more three-dimensional elements translate into a three-dimensional world view, and
extracting the one or more three-dimensional elements from the component tree; and
drawing, into the artificial reality environment, at least one two-dimensional element of the one or more two-dimensional elements, selected from the panel, and at least one of the one or more three-dimensional elements, into the three-dimensional world view, wherein the drawing is based on the three-dimensional world view.

2. The method of claim 1,
wherein the multiple nodes include a parent node and a child node dependent upon the parent node, and
wherein the drawing of a content element at the child node is dependent on a content element at the parent node;
optionally, wherein a first two-dimensional element of the one or more two-dimensional elements is at the parent node; wherein a second two-dimensional element of the one or more two-dimensional elements is at the child node; and wherein the first two-dimensional element is added to the panel prior to the second two-dimensional element.

3. The method of claim 2,
wherein the content element at the parent node is a two-dimensional element of the one or more two-dimensional elements, and
wherein the content element at the child node is a three-dimensional element of the one or more three-dimensional elements;
optionally, wherein performing the second pass of traversing the component tree further includes: flattening the three-dimensional element at the child node into a two-dimensional element onto the panel.

4. The method of any preceding claim, wherein the multiple nodes include at least one interaction node defining one or more events responsive to interaction with at least one of the one or more two-dimensional elements, at least one of the one or more three-dimensional elements, or both.

5. The method of any preceding claim, wherein the multiple nodes include at least one layout node defining how at least one of the one or more two-dimensional elements are positioned in the three-dimensional world view, how at least one of the one or more three-dimensional elements are positioned in the three-dimensional world view, or both.

6. The method of any preceding claim, wherein the multiple nodes include at least one physics node defining dynamic behavior of at least one of the one or more two-dimensional elements, at least one of the one or more three-dimensional elements, or both, within the artificial reality environment.

7. The method of any preceding claim, wherein the multiple nodes include at least one of:
A) an input node defining an input event corresponding to at least one of the one or more two-dimensional elements, at least one of the one or more three-dimensional elements, or both,
B) an output node defining an output event corresponding to at least one of the one or more two-dimensional elements, at least one of the one or more three-dimensional elements, or
C) both.

8. A computer-readable storage medium storing instructions that, when executed by a computing system, cause the computing system to perform a process for integrating two-dimensional and three-dimensional elements in an artificial reality environment, the process comprising:
obtaining a component tree including multiple nodes, the multiple nodes including one or more two-dimensional elements and one or more three-dimensional elements;
performing a first pass of traversing the component tree including:
extracting the one or more two-dimensional elements from the component tree, and
adding the one or more two-dimensional elements onto a panel in a renderable state, and
performing a second pass of traversing the component tree including:
determining how the one or more two-dimensional elements and the one or more three-dimensional elements translate into a three-dimensional world view, and
extracting the one or more three-dimensional elements from the component tree; and
drawing, into the artificial reality environment, at least one two-dimensional element of the one or more two-dimensional elements, selected from the panel, and at least one of the one or more three-dimensional elements, into the three-dimensional world view, wherein the drawing is based on the first pass and the second pass.

9. The computer-readable storage medium of claim 8, wherein one or more of the multiple nodes are declaratively defined by executing one or more pre-defined functions, and at least one of the multiple nodes is imperatively defined by executing one or more functions specified for the at least one node.

10. The computer-readable storage medium of claim 8 or claim 9, wherein the drawing is further based on the three-dimensional world view.

11. The computer-readable storage medium of any one of claims 8 to 10,
wherein the multiple nodes include at least one parent node and at least one child node dependent upon the parent node, and
wherein the drawing of a content element at the child node is dependent on a content element at the parent node.

12. The computer-readable storage medium of claim 11,
wherein the content element at the parent node is a two-dimensional element of the one or more two-dimensional elements, and
wherein the content element at the child node is a three-dimensional element of the one or more three-dimensional elements;
optionally, wherein performing the second pass of traversing the component tree further includes:
flattening the three-dimensional element at the child node into a two-dimensional element onto the panel.

13. A computing system for integrating two-dimensional and three-dimensional elements in an artificial reality environment, the computing system comprising:
one or more processors; and
one or more memories storing instructions that, when executed by the one or more processors, cause the computing system to perform a process comprising:
obtaining a component tree including multiple nodes, the multiple nodes including one or more two-dimensional elements and one or more three-dimensional elements;
performing a first pass of traversing the component tree including:
extracting the one or more two-dimensional elements from the component tree, and
adding the one or more two-dimensional elements onto a panel in a renderable state, and
performing a second pass of traversing the component tree including:
determining how the one or more two-dimensional elements and the one or more three-dimensional elements translate into a three-dimensional world view, and
extracting the one or more three-dimensional elements from the component tree; and
drawing at least one two-dimensional element of the one or more two-dimensional elements, selected from the panel, and at least one of the one or more three-dimensional elements, into the three-dimensional world view, wherein the drawing is based on the first pass and the second pass.

14. The computing system of claim 13, wherein one or more of the multiple nodes are declaratively defined by executing one or more pre-defined functions that generate one or more nodes, and at least one of the multiple nodes is imperatively defined by evaluating corresponding imperative statements with content properties that produce one or more nodes.

15. The computing system of claim 13 or claim 14, and one or more of the following:
wherein the multiple nodes include at least one interaction node defining one or more events responsive to interaction with at least one of the one or more two-dimensional elements, at least one of the one or more three-dimensional elements, or both;
wherein the multiple nodes include at least one layout node defining how at least one of the one or more two-dimensional elements are positioned in the three-dimensional world view, how at least one of the one or more three-dimensional elements are positioned in the three-dimensional world view, or both;
wherein the multiple nodes include at least one physics node defining dynamic behavior of at least one of the one or more two-dimensional elements, at least one of the one or more three-dimensional elements, or both, within the artificial reality environment.
